# EUROPÄISCHE PATENTANMELDUNG

(11) **EP 3 954 925 A1**
(43) Veröffentlichungstag der Anmeldung: **16.02.2022**
(21) Anmeldenummer: 20190590.8
(22) Anmeldetag: 11.08.2020
(51) Int. Cl.: F16H 57/04, F16D 1/08, F16H 57/00

(54) **GETRIEBE MIT ÖLVERSORGUNG FÜR KERBVERZAHNUNG SOWIE WINDKRFATANLAGE MIT EINEM SOLCHEN GETRIEBE SOWIE COMPUTERIMPLEMNETIERTES VERFAHREN ZUR SIMULATION EINES SOLCHEN GETRIEBES**

(71) Anmelder: Flender GmbH, 46395 Bocholt (DE)
(72) Erfinder: Dietz, Katrin, 45357 Essen (DE); Hessling, Pascal, 46395 Bocholt (DE); Vossschmidt, Tim, 45899 Gelsenkirchen (DE)
(74) Vertreter: Michalski Hüttermann & Partner Patentanwälte mbB

(57) **Zusammenfassung**

Die Erfindung betrifft ein Getriebe (TGR) mit einer als Kerbverzahnung (SRT) ausgebildeten Welle-Nabe-Verbindung (SHC), die eine axiale Erstreckung entlang einer Wellenachse (SHX) aufweist, wobei eine Ölzuleitung (OLS) der Kerbverzahnung (SRT) vorgesehen ist, um in der Kerbverzahnung (SRT) auftretende relative Bewegungen zwischen einer Wellenseite (SFS) und einer Nabenseite (HBS) der Welle-Nabe-Verbindung (SHC) zu schmieren. Zur Verbesserung der Betriebssicherheit und im Interesse einer kompakteren Bauweise wird vorgeschlagen, dass die Ölzuleitung (OLS) direkt in einen Hohlraum (CAV) an der Kerbverzahnung (SRT) einmündet, sodass die Kerbverzahnung (SRT) mit dem Öl (OIL) unter dem in dem Hohlraum (CAV) herrschenden Öldruck (OPR) versorgbar ist.

## Beschreibung

Die Erfindung betrifft ein Getriebe mit einer als Kerbverzahnung ausgebildeten Welle-Nabe-Verbindung, die eine axiale Erstreckung entlang einer Wellenachse aufweist, wobei eine Ölzuleitung der Kerbverzahnung vorgesehen ist, um in der Kerbverzahnung auftretende relative Bewegungen zwischen einer Wellenseite und einer Nabenseite der Welle-Nabe-Verbindung zu schmieren.

Aus der EP 2 199 607 A2 ist bereits ein Getriebe eingangs definierter Art bekannt.

Aus der DE102012202454A1 ist bereits eine Spritzölversorgung für ein Planetengetriebe bekannt.

Die Druckschriften EP 2 597 307 A3 und US 2010/007 151 A2 offenbaren eine Windkraftanlage mit einem Getriebe und ein doppelwandiges Pitchrohr mit einem äußeren und einem inneren Rohr. Der zwischen dem inneren und dem äußeren Rohr gebildete Hohlraum dient dabei der Zuführung von Schmierstoff. Die elektrischen Leitungen verlaufen durch das innere Rohr.

Bei einschlägigen Anlagen - zum Beispiel Planetengetrieben an Windkraftanlagen - ist es stets eine wichtige Vorgabe, den Bauraum des Getriebes verringern. Die Ausführung einer Welle-Nabe-Verbindung als eine Kerbverzahnung ist diesbezüglich häufig eine leistungsfähige Lösung. Diese Verbindung benötigt eine adäquate Schmierung, weil es zwischen den anliegenden Materialien zu Relativbewegungen kommt, die mittel- und langfristig bei unzureichender Schmierung zur Zerstörung der Verbindung führen können. Herkömmlich ist hierfür häufig eine Spritzölversorgung vorgesehen, sodass insbesondere Oberflächenspannungen des Schmierstoffs für eine Kriechströmung durch den Spalt der Kerbverzahnung sorgen. Beobachtungen haben jedoch ergeben, dass durch eine derartige Schmierstoffversorgung häufig keine ausreichende Schmierung hergestellt werden kann. Der Ausdruck "Kerbverzahnung" wird einschlägig auch häufig als "Kurzverzahnung" bezeichnet.

Eine Spritzölversorgung ist zudem raumgreifend, nutzt das zur Verfügung stehende Ölvolumen wenig effizient - so dass ein verhältnismäßig hoher Ölverbrauch entsteht - und bedarf auch weiterer Umstände (keine Verschmutzung, keine sonstigen Störeinflüsse - wie zum Beispiel entgegenstehende Druckdifferenzen) .

Ausgehend von den Problemen und Nachteilen des Standes der Technik hat es sich die Erfindung zur Aufgabe gemacht, ein Getriebe eingangs definierter Art derart weiterzubilden, sodass die erläuterten Probleme und Nachteile vermieden werden.

Zur erfindungsgemäßen Lösung der Aufgabe wird ein Getriebe eingangs definierter Art mit den zusätzlichen Merkmalen des Kennzeichens des unabhängigen Anspruchs 1 vorgeschlagen. Daneben schlägt die Erfindung ein Verfahren zur Simulation und ein entsprechendes Computerprogrammprodukt vor. Die jeweils abhängigen Unteransprüche beinhalten vorteilhafte Weiterbildungen der Erfindung.

Begriffe, wie radial, tangential oder Umfangsrichtung beziehen sich jeweils auf die erste Drehachse - oder, wenn dies entsprechend angegeben ist, auf eine jeweils zweite Drehachse.

Das erfindungsgemäße Getriebe zeichnet sich dadurch aus, dass eine hohe Betriebssicherheit gewährleistet ist, weil die Welle-Nabe-Verbindung in der Ausbildung als eine Kerbverzahnung aufgrund der erfindungsgemäßen Ölversorgung mit einer Ölzuleitung direkt in einen Hohlraum an der Kerbverzahnung für eine sichere Versorgung mit Öl unter dem in dem Hohlraum herrschenden Öldruck sorgt.

Eine vorteilhafte Weiterbildung sieht vor, dass der Hohlraum an einem axialen Ende der Kerbverzahnung angeordnet ist. Auf diese Weise wird der von der Kerbverzahnung gebildete mäanderförmige und sich in Umfangsrichtung erstreckende Spalt von dem Öl von einem axialen Ende zu dem anderen axialen Ende durchströmt.

Eine andere bevorzugte Weiterbildung der Erfindung sieht vor, dass der Hohlraum in einem mittleren axialen Bereich der Kerbverzahnung angeordnet ist, so dass sich beidseitig des Hohlraums mindestens 20% der verbleibenden axialen Erstreckung der Kerbverzahnung befinden. Auf diese Weise ist die Effizienz der zugeführten Ölmenge besonders hoch.

Besonders zweckmäßig ist eine Ausbildung der Erfindung, bei der das Getriebe als ein Umlaufrädergetriebe ausgebildet ist, wobei das Umlaufrädergetriebe mindestens ein Hohlrad, mindestens zwei Umlaufräder an mindestens einer Stegwelle und mindestens ein Zentralrad an einer Zentralwelle aufweist, wobei die Kerbverzahnung als eine kraftübertragende Verbindung zwischen dem Zentralrad und der Zentralwelle vorgesehen ist. DE als Oberlaufräder bezeichneten Bauteile werden auch häufig als Planetenräder bezeichnet. Das hier als Zentralrat bezeichnete Bauteil wird auch häufig als Sonnenrad bezeichnet. Die Stegwelle wird auch häufig als Planetenträger bezeichnet.

Eine zusätzliche vorteilhafte Weiterbildung sieht vor, dass das Umlaufrädergetriebe mehrstufig ausgebildet ist, wobei eine erste Umlaufrädergetriebestufe mindestens umfasst: ein erstes Hohlrad, erste Umlaufräder an mindestens einer ersten Stegwelle und ein erstes Zentralrad an einer ersten Zentralwelle, wobei eine zweite Umlaufrädergetriebestufe mindestens umfasst: mindestens ein zweites Hohlrad, zweite Umlaufräder an mindestens einer zweiten Stegwelle und ein zweites Zentralrad an einer zweiten Zentralwelle, wobei das erste Zentralrad mittels der Kerbverzahnung mit der ersten Zentralwelle gekoppelt ist, wobei die erste Zentralwelle und die zweite Stegwelle mindestens drehfest miteinander verbunden sind, wobei mindestens eine Umlaufrädergetriebestufe mit einer Ölzuleitung zu einer Kerbverzahnung nach der Erfindung ausgebildet ist. Die bei Umlaufgetrieben übliche Hohlverzahnung ist hierbei Bestandteil des Stators. Die beiden Umlaufgetriebe sind jeweils in Reihe angeordnet, wobei ausgehend von dem Antrieb (Windflügel der Windkraftanlage) ein Drehmoment in die erste Stegwelle eingeleitet wird, die mittels Umlaufrädern die Leistung auf ein erstes Zentralrad überträgt. Das erste Zentralrad geht in die zweite Stegwelle über, wobei der Übergang von dem ersten Zentralrad auf die zweite Stegwelle als von der der Kerbverzahnung gebildet angesehen werden kann. Dementsprechend kann die zweite Stegwelle im Wesentlichen auch als das erste Zentralrad bezeichnet werden. Eine derartige Mehrstufigkeit kann sich theoretisch nahezu beliebig fortsetzen.

Besonders bevorzugt ist die Ölzuleitung in oder an der Zentralwelle angeordnet. Auf diese Weise kann der Kerbverzahnung ohne weiteren Übergang mit einer Relativdrehzahl das Öl zugeführt werden.

Eine vorteilhafte Weiterbildung sieht vor, dass die Ölzuleitung mittels einer Ölzuführung aus einem Stator des Getriebes mit Öl versorgt wird, wobei die Ölzuführung eine Wellendichtungs-gedichtete Ringkammer zwischen dem Stator und der Zentralwelle aufweist. Eine derartige Überbrückung eine Relativdrehzahl mit dem Ölstrom arbeitet zuverlässig und dauerhaft.

Eine andere erfindungsgemäße Möglichkeit zur Ölversorgung der Kerbverzahnung sieht vor, dass die Ölzuleitung mittels einer Ölversorgung an einem Stator des Getriebes mit Öl versorgt wird, wobei die Ölversorgung mindestes eine Austrittsöffnung aufweist, die gegenüber von mindestens einer sich in Umfangsrichtung der Kreisbewegung der Zentralwelle sich erstreckenden Eintrittsöffnungen in dem Hohlraum an einem axialen Ende der Kerbverzahnung angeordnet ist, so dass ein Ölstrahl aus der Austrittsöffnung im Betrieb in die mindestens eine Eintrittsöffnungen zumindest in bestimmten Kreisbewegungsabschnitten eintreten kann. Auf diese Weise kann die Versorgung der Kerbverzahnung mit Schmieröl einerseits und die Überbrückung einer Relativdrehzahl mit dem Ölstrom andererseits in einem einzigen Modul integriert werden.

Eine bevorzugte Anwendung der Erfindung liegt in dem Gebiet der Windkraftanlagen. Hierbei ist eine mögliche Weiterbildung der Erfindung ein erfindungsgemäßes Getriebe für eine Windkraftanlage, die Gondel einer Windkraftanlage umfassend ein erfindungsgemäßes Getriebe oder eine Windkraftanlage mit einem erfindungsgemäßen Getriebe. Hierbei bezieht sich das "erfindungsgemäße Getriebe" entweder auf eine Merkmalskombination gemäß dem Hauptanspruch oder auf eine durch die Rückbezüge der Patentansprüche definierte Merkmalskombination. Besonders zweckmäßig ist hierbei ein Flügelrotor der Windkraftanlage mit der ersten Stegwelle (CA1) des Getriebes kraftübertragend verbunden ist.

Eine vorteilhafte Weiterbildung der Windkraftanlage sieht vor, dass an dem Flügelrotor eine Pitchverstellvorrichtung vorgesehen ist, wobei die Pitchverstellvorrichtung mittels Steuerleitungen angesteuert wird, wobei die Steuerleitungen einen Leitungsverbund bilden mit der Ölzuführung zu der Ölzuleitung. Der Leitungsverbund kann hierbei vorteilhaft als "doppelwandiges Pitchrohr" ausgebildet sein, derart, dass die Steuerleitung für die Pitchverstelleinrichtung (in der Regel elektrische Leitungen) durch das zentrale Rohr hindurch geführt werden und in dem Zwischenbereich zwischen dem äußeren Rohr und dem inneren Rohr eine Ölversorgung vorgesehen ist, die auch in erfindungsgemäßer Weise die Kerbverzahnung mit Öl versorgt.

Die Erfindung bezieht sich auch auf ein computerimplementiertes Verfahren zur Simulation einer Anordnung nach mindestens einer durch die Ansprüche definierte Merkmalskombination. Dementsprechend umfasst die Erfindung einerseits das körperliche Gebilde mit den erfindungsgemäßen Merkmalen und andererseits auch einen digitalen Zwilling, wie er beispielsweise zum Zweck der Simulation der Anordnung bzw. des Betriebes der Anordnung mittels mindestens eines Computers eingesetzt wird. Daneben bezieht sich die Erfindung auch auf ein entsprechendes Computerprogrammprodukt.

Im Folgenden ist die Erfindung anhand eines speziellen Ausführungsbeispiels zur Verdeutlichung näher beschrieben. Es zeigen:
- Figur 1: eine schematische, vereinfachte Darstellung eines Getriebes nach der Erfindung, das als mehrstufiges Planetengetriebe einer Windkraftanlage ausgebildet ist,
- Figur 2: einen Ausschnitt eines schematischen Längsschnitts durch ein erfindungsgemäßes Getriebe,
- Figur 3: einen etwas anderen Ausschnitt als in Figur 2 umfassend weitere Details der Ölversorgung für die Kerbverzahnung,
- Figur 4: ein Detail, das in der Figur 3 als IV ausgewiesen ist,
- Figur 5: eine Variante der Ölversorgung für die Kerbverzahnung in schematischer Längsschnittdarstellung,
- Figur 6: ein Detail, das in der Figur 5 als VI ausgewiesen ist,
- Figur 7: eine andere Variante der Ölversorgung für die Kerbverzahnung in schematischer Längsschnittdarstellung,
- Figur 8: eine weitere Variante der Ölversorgung für die Kerbverzahnung in schematischer Längsschnittdarstellung,
- Figur 9: eine weitere Variante der Ölversorgung für die Kerbverzahnung in schematischer Längsschnittdarstellung,
- Figur 10: ein Detail, das in der Figur 9 als X ausgewiesen ist.

Funktionsgleiche Bauteile sind teilweise mit identischen Bezugszeichen versehen. Funktionsgleiche Bauelemente werden teilweise nicht in allen Figuren ausgewiesen und auch nicht zu jeder einzelnen Abbildung separat wiederholt erläutert. Es ist grundsätzlich davon auszugehen, dass diese Bauelemente in den unterschiedlichen Darstellungen jeweils eine im Wesentlichen gleiche Funktion aufweisen.

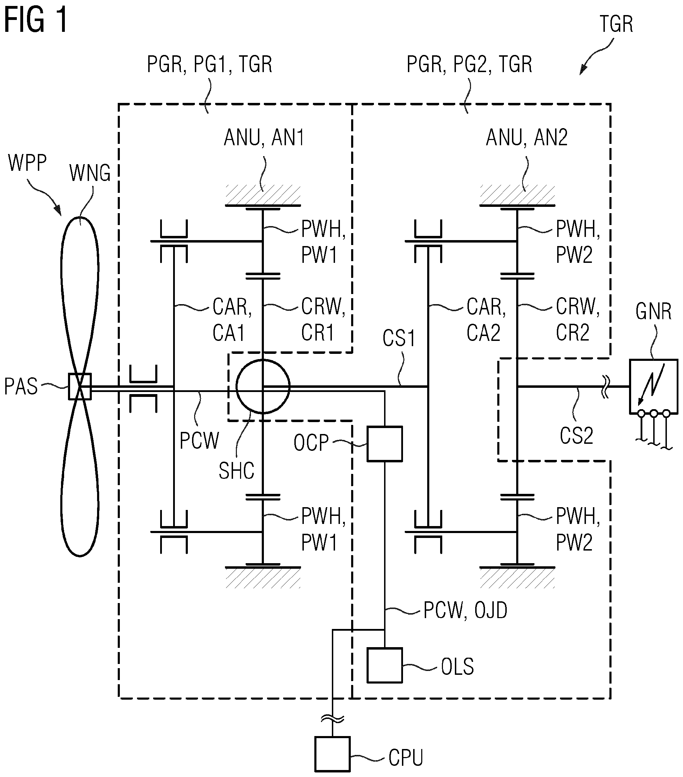

Figur 1 zeigt eine schematische, vereinfachte Darstellung eines Getriebes TGR nach der Erfindung, das als mehrstufiges Planetengetriebe bzw. Umlaufrädergetriebe einer Windkraftanlage WPP ausgebildet ist. Grundsätzlich umfasst das jeweilige Umlaufrädergetriebe PGR mindestens ein Hohlrad ANU, mindestens zwei Umlaufräder PWH an mindestens einer Stegwelle CAR und mindestens ein Zentralrad CRW an einer Zentralwelle CSH, wobei - wie in anderen Figuren dargestellt - eine erfindungsgemäße Kerbverzahnung SRT als eine kraftübertragende Verbindung zwischen dem Zentralrad CRW und der Zentralwelle CSH vorgesehen ist.

Das dargestellte Getriebe TGR ist als Umlaufrädergetriebe PGR mehrstufig ausgebildet. Eine erste Umlaufrädergetriebestufe PG1 umfasst:
ein erstes Hohlrad AN1, erste Umlaufräder PW1 an mindestens einer ersten Stegwelle CA1 und ein erstes Zentralrad CR1 an einer ersten Zentralwelle CS1,
Eine zweite Umlaufrädergetriebestufe PG1 umfasst:
   mindestens ein zweites Hohlrad AN2, zweite Umlaufräder PW2 an mindestens einer zweiten Stegwelle CA2 und ein zweites Zentralrad CR2 an einer zweiten Zentralwelle CS2. Das erste Zentralrad CR1 ist mittels der Kerbverzahnung SRT mit der ersten Zentralwelle CS1 gekoppelt ist, wobei die erste Zentralwelle CS1 und die zweite Stegwelle CA2 mindestens drehfest miteinander verbunden sind. Vorliegend sind die erste Zentralwelle CS1 und die zweite Stegwelle CA2 als ein gemeinsames Bauteil ausgebildet.

Die in Figur 1 dargestellte Windkraftanlage WP P umfasst außerdem einen an der 2. Zentralwelle CS 2 angekoppelte Generator G NR zur Stromerzeugung. Ein Flügelrotor WNG der Windkraftanlage WPP ist mit der ersten Stegwelle CA1 des Getriebes TGR kraftübertragend verbunden. An dem Flügelrotor WNG ist eine Pitchverstellvorrichtung PAS vorgesehen. Die Pitchverstellvorrichtung PAS wird mittels Steuerleitungen PCW angesteuert, wobei die Steuerleitungen PCW einen Leitungsverbund bilden mit der Ölzuführung OCP zu der Ölzuleitung OLS. In nicht dargestellter aber bereits oben erläuterter Weise ist dieser Leitungsverbund als sogenanntes "doppelwandiges Pitchrohr" ausgeführt. Diese Steuerleitungen PCW verbinden die Pitchverstelleinrichtung PAS mit einer zentralen Steuerung CPU.

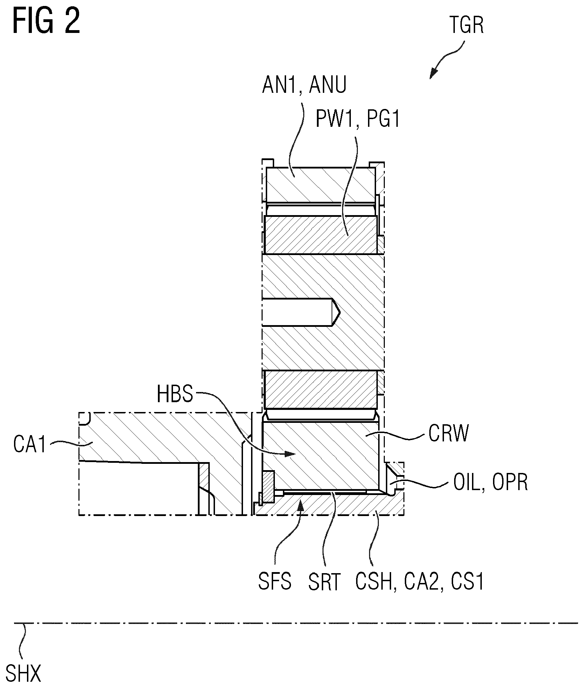

Die Figuren 2-8 zeigen jeweils unterschiedliche schematische Darstellungen von Ausschnitten aus Längsschnitten durch ein als erfindungsgemäßes Getriebe TGR ausgebildetes mehrstufiges Umlaufrädergetriebe PGR. Die Hohlräder ANU, AN1, AN2 bzw. deren zentralen Achsen erstrecken sich hierbei jeweils koaxial zur Wellenachse SHX bzw. zur Drehachse der jeweiligen Zentralwelle CSH, CA1, CA2. Die jeweils drehbaren Bauteile sind in nicht näher erläuterter Weise mittels Wälzlagern oder Gleitlagern zueinander oder zu einem Stator STA drehbar gelagert. Drehachsen von Umlaufrädern PW1, PW2 erstrecken sich jeweils parallel zu der zentralen Drehachse SHX.

Zwischen der Zentralwelle CSH, CS1, CS2 und dem Zentralrad CRW, CW1, CW2 ist eine als Kerbverzahnung SRT ausgebildete Welle-Nabe-Verbindung SHC angeordnet, die eine axiale Erstreckung entlang einer Wellenachse SHX aufweist, wobei eine Ölzuleitung OLS der Kerbverzahnung SRT vorgesehen ist, um in der Kerbverzahnung SRT auftretende relative Bewegungen zwischen einer Wellenseite SFS und einer Nabenseite HBS der Welle-Nabe-Verbindung SHC zu schmieren. Die Ölzuleitung mündet OLS direkt in einen Hohlraum CAV an der Kerbverzahnung SRT ein, sodass die Kerbverzahnung SRT mit dem Öl OIL unter dem in dem Hohlraum CAV herrschenden Öldruck OPR versorgbar ist.

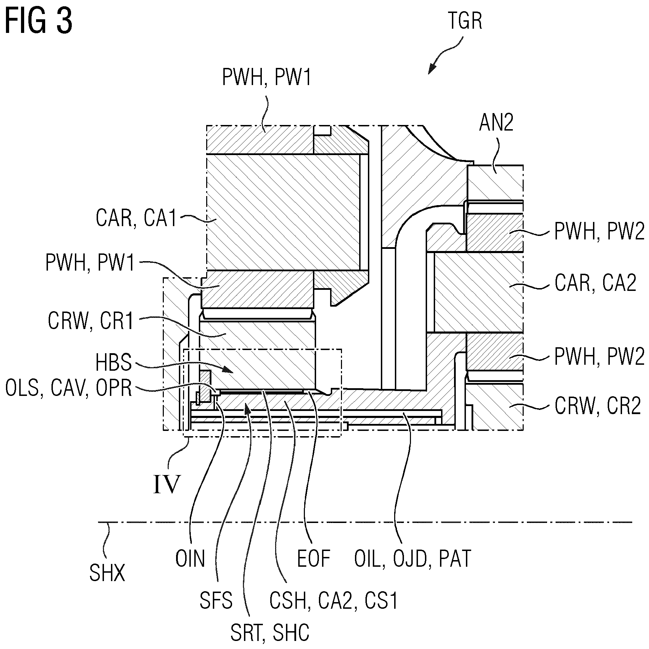

Figur 3 zeigt hierbei, wie das doppelwandige Pitchrohr PAT zum Transport des Öls OIL in den als Ölzuleitung OLS ausgebildeten Hohlraum CAV gestaltet ist. Aus dem Hohlraum CAV wird die Kerbverzahnung SRT mit dem Öldruck OPR versorgt.

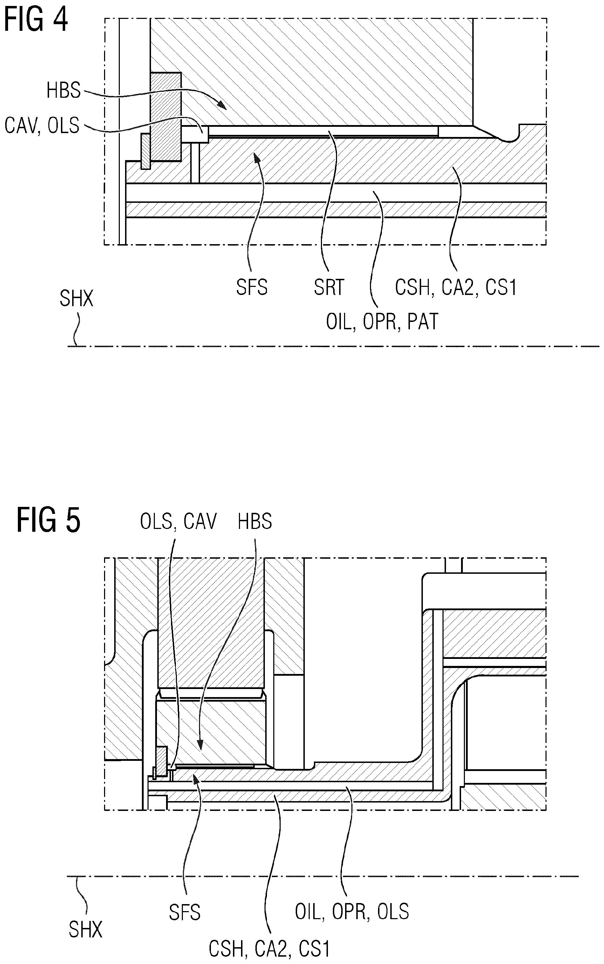

In einer vergrößerten Detaildarstellung zeigt Figur 4, dass der Hohlraum CAV an dem linken axialen Ende der Kerbverzahnung SRT angeordnet ist, sodass das Öl OIL den Spalt der Kerbverzahnung SRT axial von links nach rechts durchströmt.

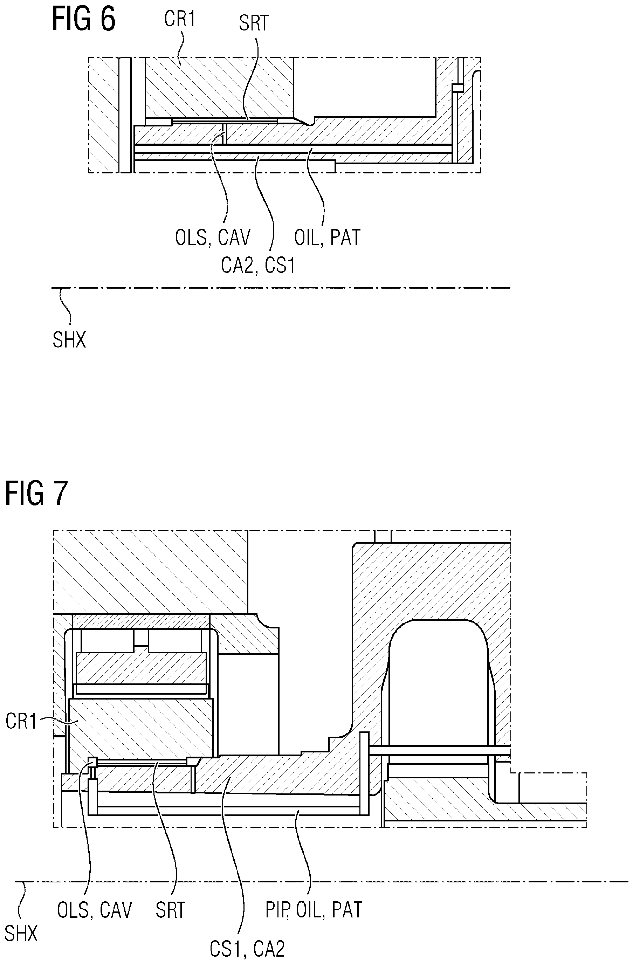

In einer etwas größeren Übersicht zeigt Figur 5 den Weg des Öls OIL durch das doppelwandige Pitchrohr PAT ausgehend von einer Ölzuführung OCP. Die Ölzuführung OCP kann als eine Wellendichtungs-gedichtete Ringkammer (nicht dargestellt) ausgebildet sein, wobei zum Beispiel eine Bronzebuchse eine als Gleitlager arbeitende Dichtung ausbildet und zwischen den beiden relativ rotierenden Bauteilen einen Hohlraum in Ringform definiert. Die Figuren 7, 8, 9 zeigen jeweils Varianten der Ölzuführung OCP.

Figur 6 zeigt ein Detail der Ölzuleitung OLS in den Hohlraum CAV an der Kerbverzahnung SRT der Figur 5 vergrößert. Im Vergleich dazu zeigt Figur 7 eine Variante, bei der der Hohlraum CAV bzw. die Ölzuleitung OLS im mittleren Bereich der Kerbverzahnung SRT zwischen den beiden axialen Enden angeordnet ist.

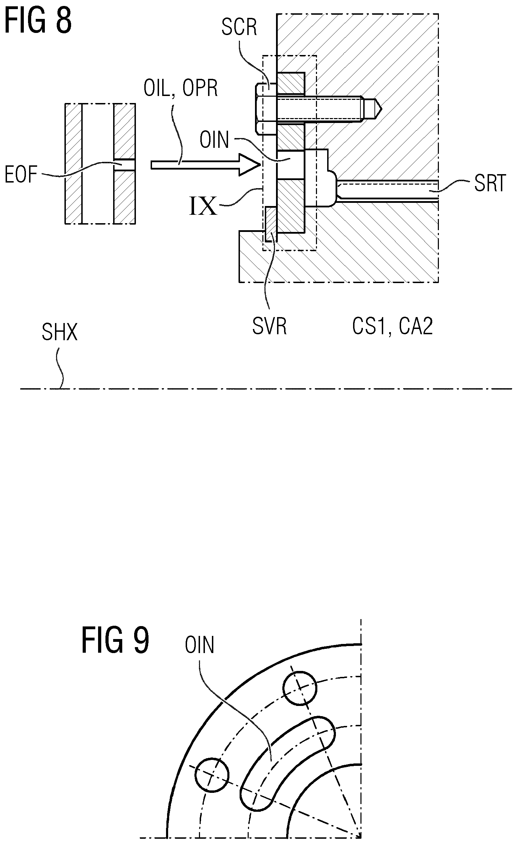

Während die vorhergehenden Varianten der Ölzuleitung OLS eine Zufuhr des Öls OIL als in Bauteile integrierte Kanäle vorsehen, zeigt Figur 8 die Möglichkeit, separate Rohrleitungen PIP an den entsprechenden Bauteilen für das Öl anzubringen.

Die Figuren 9, 10 zeigen die Ölzuleitung OLS mittels einer Ölversorgung OJD an einem Stator STT des Getriebes TGR mit Öl OIL versorgt wird, wobei die Ölversorgung OJD eine oder mehrere Austrittsöffnungen EOF aufweist, die gegenüber von mindestens einer sich in Umfangsrichtung der Kreisbewegung der Zentralwelle CSH sich erstreckenden Eintrittsöffnungen OIN in dem Hohlraum CAV an einem axialen Ende der Kerbverzahnung SRT angeordnet ist, so dass ein Ölstrahl aus der Austrittsöffnung EOF im Betrieb in die mindestens eine Eintrittsöffnungen OIN zumindest in bestimmten Kreisbewegungsabschnitten eintreten kann.

## Patentansprüche

1. Getriebe (TGR) mit einer als Kerbverzahnung (SRT) ausgebildeten Welle-Nabe-Verbindung (SHC), die eine axiale Erstreckung entlang einer Wellenachse (SHX) aufweist, wobei eine Ölzuleitung (OLS) der Kerbverzahnung (SRT) vorgesehen ist, um in der Kerbverzahnung (SRT) auftretende relative Bewegungen zwischen einer Wellenseite (SFS) und einer Nabenseite (HBS) der Welle-Nabe-Verbindung (SHC) zu schmieren,
**dadurch gekennzeichnet, dass**
die Ölzuleitung (OLS) direkt in einen Hohlraum (CAV) an der Kerbverzahnung (SRT) einmündet, sodass die Kerbverzahnung (SRT) mit dem Öl (OIL) unter dem in dem Hohlraum (CAV) herrschenden Öldruck (OPR) versorgbar ist.

2. Getriebe (TGR) nach Anspruch 1, wobei der Hohlraum (CAV) an einem axialen Ende der Kerbverzahnung (SRT) angeordnet ist.

3. Getriebe (TGR) nach Anspruch 1, wobei der Hohlraum (CAV) in einem mittleren axialen Bereich der Kerbverzahnung (SRT) angeordnet ist, so dass sich beidseitig des Hohlraums (CAV) mindestens 20% der verbleibenden axialen Erstreckung der Kerbverzahnung (SRT) befinden.

4. Getriebe (TGR) nach Anspruch 1, 2 oder 3, wobei das Getriebe (TGR) als ein Umlaufrädergetriebe (PGR) ausgebildet ist,
wobei das Umlaufrädergetriebe (PGR) mindestens ein Hohlrad (ANU), mindestens zwei Umlaufräder (PWH) an mindestens einer Stegwelle (CAR) und mindestens ein Zentralrad (CRW) an einer Zentralwelle (CSH) aufweist, wobei die Kerbverzahnung (SRT) als eine kraftübertragende Verbindung zwischen dem Zentralrad (CRW) und der Zentralwelle (CSH) vorgesehen ist.

5. Getriebe (TGR) nach einem der vorhergehenden Ansprüche 1-4, wobei das Umlaufrädergetriebe (PGR) mehrstufig ausgebildet ist,
wobei eine erste Umlaufrädergetriebestufe (PG1) mindestens umfasst:
ein erstes Hohlrad (AN1), erste Umlaufräder (PW1) an mindestens einer ersten Stegwelle (CA1) und ein erstes Zentralrad (CR1) an einer ersten Zentralwelle (CS1),
wobei eine zweite Umlaufrädergetriebestufe (PG1) mindestens umfasst:
mindestens ein zweites Hohlrad (AN2), zweite Umlaufräder (PW2) an mindestens einer zweiten Stegwelle (CA2) und ein zweites Zentralrad (CR2) an einer zweiten Zentralwelle (CS2),
wobei das erste Zentralrad (CR1) mittels der Kerbverzahnung (SRT) mit der ersten Zentralwelle (CS1) gekoppelt ist, wobei die erste Zentralwelle (CS1)und die zweite Stegwelle (CA2) mindestens drehfest miteinander verbunden sind,
wobei mindestens eine Umlaufrädergetriebestufe (PG1, PG2) mit einer Ölzuleitung (OLS) zu einer Kerbverzahnung (SRT) nach einem der vorhergehenden Ansprüche 1-5 ausgebildet ist.

6. Getriebe (TGR) nach Anspruch 4 oder 5, wobei die Ölzuleitung (OLS) in oder an der Zentralwelle (CSH) angeordnet ist.

7. Getriebe (TGR) nach mindestens dem vorhergehenden Anspruch 6, wobei die Ölzuleitung (OLS) mittels einer Ölzuführung (OCP) aus einem Stator (STT) des Getriebes (TGR) mit Öl (OIL) versorgt wird, wobei die Ölzuführung (OCP) eine Wellendichtungs-gedichtete Ringkammer zwischen dem Stator (STT) und der Zentralwelle (CSH) aufweist.

8. Getriebe (TGR) nach mindestens den vorhergehenden Ansprüchen 2 und 6, wobei die Ölzuleitung (OLS) mittels einer Ölversorgung (OJD) an einem Stator (STT) des Getriebes (TGR) mit Öl (OIL) versorgt wird, wobei die Ölversorgung (OJD) mindestes eine Austrittsöffnung (EOF) aufweist, die gegenüber von mindestens einer sich in Umfangsrichtung der Kreisbewegung der Zentralwelle (CSH) sich erstreckenden Eintrittsöffnungen (OIN) in dem Hohlraum (CAV) an einem axialen Ende der Kerbverzahnung (SRT) angeordnet ist, so dass ein Ölstrahl aus der Austrittsöffnung (EOF) im Betrieb in die mindestens eine Eintrittsöffnungen (OIN) zumindest in bestimmten Kreisbewegungsabschnitten eintreten kann.

9. Windkraftanlage (WPP) mit einem Getriebe (TGR) nach mindestens einem der vorhergehenden Ansprüche.

10. Windkraftanlage (WPP) nach Anspruch 8, wobei ein Flügelrotor (WNG) der Windkraftanlage (WPP) mit der ersten Stegwelle (CA1) des Getriebes (TGR) kraftübertragend verbunden ist.

11. Windkraftanlage (WPP) nach mindestens Anspruch 9 oder 10 und Anspruch 7 oder 8, wobei an dem Flügelrotor (WNG) eine Pitchverstellvorrichtung (PAS) vorgesehen ist,
wobei die Pitchverstellvorrichtung (PAS) mittels Steuerleitungen (PCW) angesteuert wird,
wobei die Steuerleitungen (PCW) einen Leitungsverbund bilden mit der Ölzuführung (OCP) zu der Ölzuleitung (OLS) .

12. Computerimplementiertes Verfahren zur Simulation (SIM) einer Anordnung nach mindestens einem der vorhergehenden Ansprüche

13. Computerprogrammprodukt zur Durchführung eines Verfahrens nach Anspruch 12 mittels mindestens eines Computers (CMP).
